Europäisches Patentamt

European Patent Office

Office européen des brevets

(11) Publication number: **0 426 611 A2**

# EUROPEAN PATENT APPLICATION

(21) Application number: 90810747.7

(22) Date of filing: 01.10.90

(30) Priority: 31.10.89 CH 3925/89

(43) Date of publication of application:
08.05.91 Bulletin 91/19

(84) Designated Contracting States:
AT BE CH DE DK ES FR GB GR IT LI LU NL SE

(71) Applicant: Riva, Carlo
Via Valserrata
CH-6826 Riva San Vitale(CH)

(51) Int. Cl.⁵: **B01D 29/15**

(72) Inventor: **Riva, Carlo**
**Via Valserrata**
**CH-6826 Riva San Vitale(CH)**

(74) Representative: **Baggiolini, Raimondo et al**
**Patent Attorneys**
**Fiammenghi-Fiammenghi-Racheli Via San**
**Gottardo 15**
**CH-6900 Lugano(CH)**

(54) Device for the rapid fastening and unfastening of tubular filtering fabrics.

㉗ The device, whatever may be the shape of the tubular filtering fabric, comprises:

a) a bearing structure (1, 1′, 1″) able to support filtering fabric (7) in the form of the desired tubular section;

b) a fastening sleeve (2, 2′) placed at each end of tubular filtering fabric (7) and working with an outside ring (3, 3′) and an inserted annular seal (5, 5′) to allow tight anchoring of each of said ends of the tubular filtering fabric;

c) a closing fabric (4, 4′) placed at each end of filtering fabric (7) and working with said fastening sleeve (2, 2′) to press said ring (3, 3′) tight in a stable manner against said sleeve (2, 2′).

Fig. 1

EP 0 426 611 A2

## DEVICE FOR THE RAPID FASTENING AND UNFASTENING OF TUBULAR FILTERING FABRICS

This invention has as its object a device for rapid fastening and unfastening of tubular filtering fabrics, whether they be metallic or plastic or any other fabrics.

The device according to the invention essentially has the following purposes:

-- to allow making filtering elements in the most varied shapes and in different materials;

-- to allow fastening of a filtering fabric without glue or other elements in general that do not allow a rapid unfastening and refastening of the fabric;

-- to allow unfastening and refastening as well as interchangeability of fabrics in a simple and rapid manner, always guaranteeing the same fastening characteristics;

-- to allow the adaptability of the filtering element to any type of seal as well as any type of fastening to already existing structures;

-- to allow the regeneration of the fabric by unfastening, washing and refastening of it, or by means of counterwashing.

The device according to the invention is characterized by:

a) a bearing structure able to support the filtering fabric in the form of the desired tubular section;

b) a fastening sleeve (2, 2′) placed at each end of the tubular filtering fabric and working with an outside ring and an inserted annular seal to allow tight anchoring of each of said ends of the tubular filtering fabric;

c) a closing fabric placed at each end of the filtering fabric and working with said fastening sleeve to press said ring tight in a stable manner against said sleeve.

It is not known to the inventor that similar or equivalent devices now exist.

The accompanying drawing represents a preferred nonlimiting embodiment of the device according to the invention.

Fig. 1 represents it diagrammatically in front view.

Fig.2 represents it in a top view in a plane passing through II-II.

Fig. 3 represents the cross section in a plane passing through III-III.

The device is characterized by:

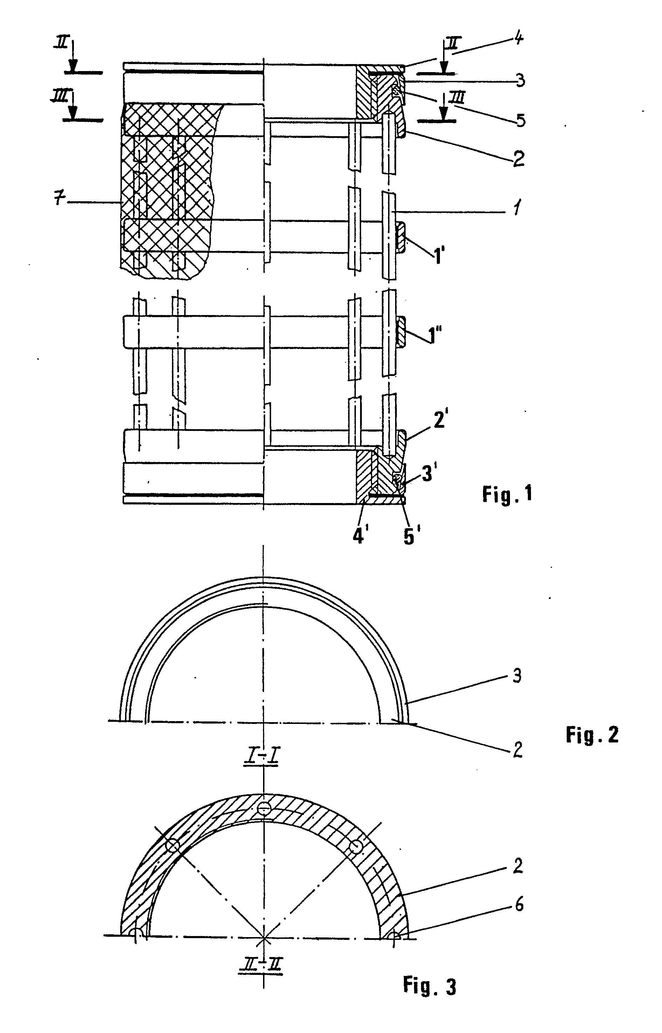

a) a bearing structure 1, 1′, 1″ (fig. 1) able to support filtering fabric 7 in the form of the desired tubular section;

b) a fastening sleeve 2, 2′ placed at each end of tubular filtering fabric 7 and working with an outside ring 3, 3′ and an inserted annular seal 5, 5′ to allow tight anchoring of each of said ends of the tubular filtering fabric;

c) a closing fabric 4, 4′ placed at each end of filtering fabric 7 and working with said fastening sleeve 2, 2′ to press said ring 3, 3′ tight in a stable manner against said sleeve 2, 2′.

The bearing structure consists of a plurality of rods 1 inserted at their two free ends, in holes 6 (fig. 3) of respective fastening sleeves 2,2′, rods further reinforced with outside rings 1′, 1″ located close to or at the central zone of said rods 1.

Said outside ring 3, 3′ is internally conical to compress corresponding annular seal (O ring) 5, 5′ against corresponding fastening sleeve 2, 2′ when it is axially thrust by relative closing fabric 4, 4′.

Each closing fabric 4, 4′ is threaded and screwed in respective fastening sleeve 2, 2′ to compress the respective annular seal 5, 5′ and the end of tubular filtering fabric 7 assuring the seal.

It is provided that:

-- the bearing structure can have various shapes, diameters and lengths and be made of various materials such as stainless steel, plastics, etc.

-- fastening sleeve 2 can be made in various shapes and various ordinary materials, such as steel and plastics;

-- the shape of the tubular section can be made so as to avoid tearing the fabric in the fastening phase;

-- fastening ring 3 can be made in various shapes and lengths and of hard materials, by which pressure on seal 5 makes possible a solid, tight anchoring of tubular fabric 7 to sleeve 2;

-- closing plate 4 can be made in various shapes and materials which allow, by various fastening systems, the perfect immobilizing of fastening ring 3.

All this without going outside the scope of protection of the patent.

## Claims

1. Device for rapid fastening and unfastening of tubular filtering fabrics, whatever may be the shape of their tubular section, characterized by:

a) a bearing structure (1, 1′, 1″) able to support filtering fabric (7) in the form of the desired tubular section;

b) a fastening sleeve (2, 2′) placed at each end of tubular filtering fabric (7) and working with an outside ring (3, 3′) and an inserted annular seal (5, 5′) to allow tight anchoring of each of said ends of the tubular filtering fabric;

c) a closing fabric (4, 4′) placed at each end of filtering fabric (7) and working with said fastening sleeve (2, 2′) to press said ring (3, 3′) tight in a stable manner against said sleeve (2, 2').

2. Device according to claim 1, wherein said bearing structure consists of a plurality of rods (1) inserted at their two free ends, in holes (6) of respective fastening sleeves (2,2'), rods further reinforced with outside rings (1', 1'') located close to or at the central zone of said rods (1).

3. Device according to claims 1 and 2, wherein said outside ring (3, 3') is internally conical to compress corresponding annular seal (0 ring) (5, 5') against corresponding fastening sleeve (2, 2') when it is axially thrust by relative closing fabric (4, 4').

4. Device according to claims 1, 2, 3, wherein each closing fabric (4, 4') is threaded and screwed in the respective fastening sleeve (2, 2') to compress the respective annular seal (5, 5') and the end of tubular filtering fabric (7) assuring the seal.

Fig. 1

Fig. 2

Fig. 3